# FASCICULE DE BREVET EUROPEEN

(11) **EP 2 379 471 B1**
(45) Date de publication et mention de la délivrance du brevet: **18.02.2015**
(21) Numéro de dépôt: 09805784.7
(22) Date de dépôt: 23.12.2009
(51) Int. Cl.: C04B 35/18, C04B 35/185, C04B 41/00, C04B 41/52, C04B 41/89, C23C 4/10, C23C 30/00, F01D 5/28, C23C 28/04

(54) **BARRIERE ENVIRONNEMENTALE POUR SUBSTRAT REFRACTAIRE CONTENANT DU SILICIUM**
UMWELTBARRIERE FÜR EIN SILICIUMHALTIGES REFRAKTÄRES SUBSTRAT
ENVIRONMENTAL BARRIER FOR A REFRACTORY SUBSTRATE CONTAINING SILICON

(30) Priorité: 24.12.2008 FR 0859076
(43) Date de publication de la demande: 26.10.2011
(73) Titulaire: HERAKLES, 33185 Le Haillan (FR); Université Bordeaux 1, 33405 Talence Cedex (FR)
(72) Inventeur: COURCOT, Emilie, F-33320 Le Taillan (FR); REBILLAT, Francis, F-33700 Merignac (FR); LOUCHET-POUILLERIE, Caroline, F-33460 Arsac (FR); TAWIL, Henri, F-33110 Le Bouscat (FR)
(74) Mandataire: Joly, Jean-Jacques
(86) Numéro de dépôt international: PCT/FR2009/052672
(87) Numéro de publication internationale: WO 2010/072978

(56) Documents cités:
- US-A1- 2003 138 641
- US-A1- 2006 073 361
- US-B1- 6 759 151
- A.TALLAIRE,V.A.SILVA,A.J.S.FERNANDES,F.M.C OSTA,R.F.SILVA: "Effect of intergranular phase of Si3N4 substrates on MPCVD diamond deposition" SURFACE AND COATINGS TECHNOLOGY, vol. 151-152, 2002, pages 521-525, XP002537624

## Description

### Arrière-plan de l'invention

L'invention concerne la protection d'un substrat, dont au moins une partie adjacente à une surface est en un matériau réfractaire contenant du silicium, lors d'une utilisation à haute température en milieu oxydant et humide, par formation sur la surface du substrat d'une barrière environnementale ne contenant pas de bore.

L'invention vise notamment la protection de matériaux réfractaires constitués par des céramiques monolithiques, par exemple en carbure de silicium SiC ou nitrure de silicium Si₃N₄, mais plus particulièrement la protection de matériaux composites réfractaires tels que des matériaux composites à matrice céramique (CMC) contenant du silicium, par exemple des CMC à matrice au moins partiellement en SiC.

Un domaine particulier d'application de l'invention est la protection de pièces en CMC formant des parties chaudes de turbines à gaz, telles que des parois de chambre de combustion, ou des anneaux de turbine, des distributeurs de turbine ou des aubes de turbines, pour des moteurs aéronautiques ou des turbines industrielles.

Pour de telles turbines à gaz, le souci d'améliorer le rendement et de réduire les émissions polluantes conduit à envisager des températures toujours plus élevées dans les chambres de combustion.

Il a donc été proposé de remplacer les matériaux métalliques par des matériaux CMC, notamment pour des parois de chambres de combustion ou anneaux de turbine. En effet, les matériaux CMC sont connus pour posséder à la fois de bonnes propriétés mécaniques permettant leur utilisation pour des éléments de structure et la capacité de conserver ces propriétés à des températures élevées. Les matériaux CMC comportent un renfort fibreux en fibres réfractaires, typiquement en carbone ou en céramique, qui est densifié par une matrice céramique, par exemple en SiC.

Dans un environnement corrosif (atmosphère oxydante, notamment en présence d'humidité et/ou d'atmosphère saline), un phénomène de récession de surface est observé avec les matériaux CMC à matrice SiC en raison de la volatilisation de la silice (SiO₂) qui se forme par oxydation à la surface du matériau CMC.

Il a été préconisé de former une barrière environnementale ou EBC ("Environmental Barrier Coating") à la surface du matériau CMC. Dans une telle barrière connue pour un substrat en matériau CMC à matrice SiC, la fonction anti-corrosion est apportée par une couche en un composé de type aluminosilicate de métal alcalino-terreux, tel que le composé BaO_{o,75} . SrO_{0,25} . Al₂O₃ (SiO₂)₂ désigné couramment sous l'abréviation BSAS. Une couche de barrière chimique formée de mullite ou une couche mixte formée d'un mélange de BSAS et de mullite est interposée entre le substrat et la couche anti-corrosion pour éviter des interactions chimiques entre le BSAS de la couche anti-corrosion et la silice formée par oxydation de la couche finale SiC du substrat. Une couche de silicium est formée sur le substrat pour permettre l'accrochage de la couche de barrière chimique. Une telle barrière environnementale est décrite notamment dans les documents US 6 866 897 et US 6 787 195. Les différentes couches sont typiquement formées par dépôt physique, notamment par plasma thermique.

Un comportement satisfaisant de cette barrière environnementale a été observé à des températures atteignant 1200°C environ mais une dégradation significative est observée lorsque la température dépasse 1300°C. En effet, la couche d'accrochage en silicium, ou la surface de la matrice du matériau du substrat contenant du silicium, peut s'oxyder facilement en silice, lors de la création de fissures ou de défauts de type éclats dans la barrière environnementale, lors de l'utilisation du matériau. Cette formation de silice va conduire vers 1310°C et au-dessus, à une interaction chimique entre le BSAS de la couche mixte BSAS+mullite et/ou de la couche finale, et la silice formée par oxydation, qui va aboutir à une dégradation plus ou moins rapide et complète de la barrière environnementale, selon la taille du défaut de celle-ci.

Il a par ailleurs été proposé dans un article de F. Smeacetto et al. ("Protective coatings for carbon bonded carbon fibre composites", Ceramics International 34 (2008), pages 1297-1301) un procédé de protection de composite carbone/carbone qui consiste à former en surface une couche de SiC par réaction chimique avec du silicium en fusion puis à déposer un revêtement en un verre à base de silice contenant de l'oxyde d'yttrium et de l'alumine. Le verre est préparé par mélange de ses oxydes constitutifs en fusion. Le revêtement est formé par dépôt en surface d'une barbotine contenant de la poudre du verre préparé puis traitement thermique. Des microfissures du revêtement peuvent être cicatrisées par nappage de la surface par le verre en fusion en portant la température à 1375°C. La température de service maximale indiquée est de 1400°C. On note toutefois que la fusion du revêtement à 1375°C rend une utilisation difficilement envisageable à partir de cette température, en particulier lorsque la surface est exposée à un flux gazeux à vitesse élevée, une élimination du revêtement par soufflage pouvant se produire.

Le document US 6 759 151 divulgue un revêtement de protection notamment pour une céramique contenant du silicium, le revêtement comprenant une couche d'accrochage, au moins une couche intermédiaire et une couche externe. La couche externe est en silicate de terre rare ou à base d'oxyde d'hafnium ou à base de zircone.

Le document US 2003/0138641 concerne également un revêtement de protection pour une céramique contenant du silicium, le revêtement étant en zircone stabilisée avec possibilité d'une couche intermédiaire en silicate de terre rare.

Quant au document US 2006/0073361, il décrit un revêtement de protection avec une couche externe en zircone stabilisée et un empilement de couches intermédiaires fonctionnelles pouvant contenir des silicates de terres rares.

Le document A. Tallaire et al. "Effect of intergranular phase of Si3N4 substrates on NPCVD diamond déposition" Surface and Coatings Technology 151-152 (2002) pages 521-525 concerne par ailleurs le dépôt par CVD d'un revêtement diamant sur une céramique Si₃N₄ obtenue par frittage de poudre et plus particulièrement l'influence sur la croissance du dépôt de la composition d'un agent de frittage choisi dans le système Y₂O₃-SiO₂-AlO₃.

### Objet et résumé de l'invention

Selon un premier aspect, l'invention a pour but de proposer un procédé de protection d'un substrat, dont au moins une partie adjacente à une surface est en un matériau réfractaire contenant du silicium, par formation d'une barrière environnementale capable de conserver son efficacité en atmosphère oxydante et humide jusqu'à au moins 1400°C, y compris en présence d'un flux gazeux à vitesse élevée.

Ce but est atteint par un procédé tel que défini par la revendication 1.

La présence d'au moins une phase solide à la température d'auto-cicatrisation augmente la tenue au soufflage.

Par "température d'auto-cicatrisation", on entend ici une température à laquelle une phase liquide est formée en quantité suffisante pour assurer la fonction d'auto-cicatrisation, c'est-à-dire au moins 5% molaire dans la composition de la couche auto-cicatrisante pour colmater efficacement les fissures susceptibles d'apparaître, sans toutefois excéder 40% molaire dans ladite composition afin d'assurer une bonne résistance au soufflage.

Avantageusement, on forme une barrière environnementale comprenant en outre une sous-couche interposée entre la surface du substrat et la couche auto-cicatrisante et qui reste à l'état solide à la température d'auto-cicatrisation. On évite ainsi l'exposition directe de la surface du substrat à la phase liquide de la couche auto-cicatrisante.

La sous-couche peut être constituée essentiellement de silicate d'au moins une terre rare ou de mullite. On peut aussi former une sous-couche par un dépôt essentiellement de mullite sur un revêtement en silicium déposé sur le substrat ou par dépôt d'un revêtement ayant essentiellement un gradient de composition silicium-mullite en partant de silicium du côté du substrat pour aboutir à mullite à l'interface avec la couche auto-cicatrisante.

Selon un mode de réalisation de l'invention, la couche auto-cicatrisante représente essentiellement un mélange de silicate de terre rare RE₂Si₂O₇, où RE est une terre rare, et de mullite (3Al₂O₃.2SiO₂).

Selon un autre mode de réalisation de l'invention, la couche auto-cicatrisante représente essentiellement un mélange d'aluminate de terre rare RE₄Al₂O₉, où RE est une terre rare, et de silice SiO₂.

La terre rare est par exemple l'une au moins choisie parmi l'yttrium Y, le scandium Sc et des lanthanides, comme par exemple l'ytterbium Yb, le dysprosium Dy, l'erbium Er et le lanthane La.

L'invention a aussi pour objet une pièce comprenant un substrat, dont au moins une partie adjacente à une surface du substrat est en matériau réfractaire contenant du silicium, et une barrière environnementale ne contenant pas de bore formée sur la surface du substrat et capable de protéger le substrat lors d'une utilisation en atmosphère oxydante et humide jusqu'à au moins 1400°C, y compris en présence d'un flux gazeux à vitesse élevée, la barrière environnementale étant du type de celle obtenue par le procédé défini ci-avant.

Selon un mode de réalisation, le substrat est en un matériau composite comprenant un renfort fibreux et une matrice, la matrice comportant au moins une phase de carbure de silicium SiC adjacente à la surface du substrat.

### Brève description des dessins

L'invention sera mieux comprise à la lecture de la description faite ci-après, à titre indicatif mais non limitatif. Il sera fait référence aux dessins annexés sur lesquels :
- la figure 1 est une vue très schématique d'une pièce en matériau composite contenant du silicium munie d'une barrière environnementale selon un mode de réalisation de l'invention ; et
- les figures 2 à 9 sont des photographies obtenues par microscope électronique à balayage montrant des états de surface de barrières environnementales conformes ou non à l'invention.

### Description détaillée de modes de réalisation

Dans la description détaillée qui suit, on envisage la formation d'une barrière environnementale sur un substrat en matériau CMC contenant du silicium. Il est toutefois rappelé que l'invention est applicable à des substrats en matériau réfractaire monolithique contenant du silicium et, plus généralement, à des substrats dont au moins une partie adjacente à une surface est en un matériau réfractaire (composite ou monolithique) contenant du silicium.

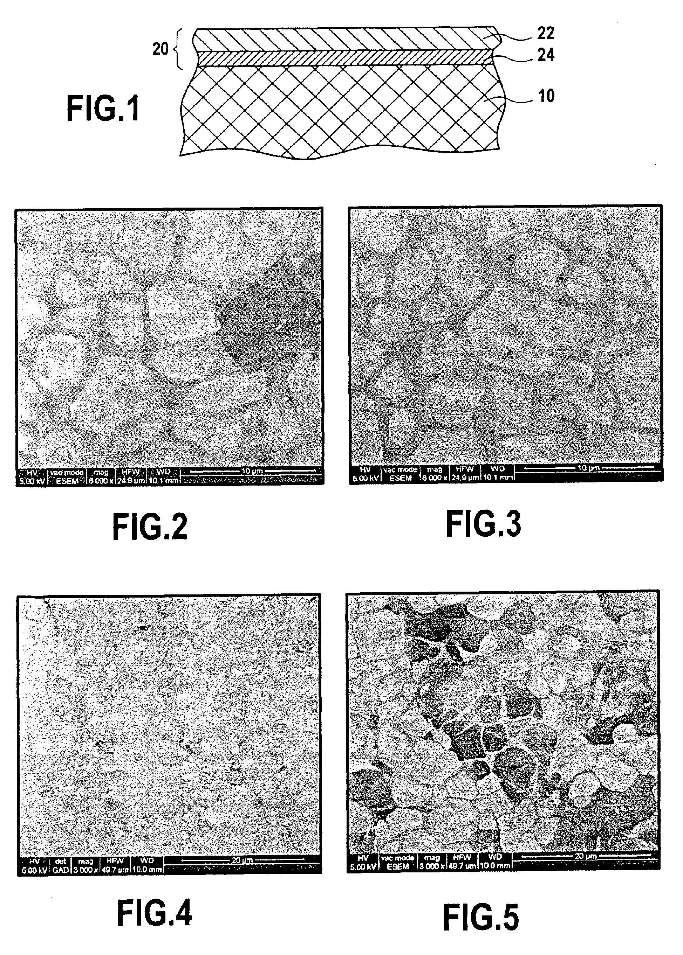

La figure 1 montre très schématiquement un substrat 10 muni d'une barrière environnementale 20 selon un mode de réalisation de l'invention.

Le substrat 10 en matériau CMC contenant du silicium comprend un renfort fibreux qui peut être en fibres de carbone (C) ou en fibres de céramique, par exemple en fibres de SiC. Les fibres SiC peuvent être revêtues d'une mince couche d'interphase en carbone pyrolytique (PyC), en nitrure de bore (BN) ou en carbone dopé au bore (BC, avec 5% at. à 20% at. de B, le complément étant C). Le renfort fibreux est densifié par une matrice qui, dans son intégralité ou au moins dans une phase de matrice externe, est constituée par un matériau contenant du silicium, tel qu'un composé du silicium, par exemple SiC, ou un système ternaire Si-B-C, par exemple. Par phase de matrice externe, on entend une phase de matrice formée en dernier, la plus éloignée des fibres du renfort. Dans ce dernier cas, la matrice peut être formée de plusieurs phases de natures différentes par exemple :
une matrice mixte C-SiC (le SiC étant du côté externe), ou
une matrice séquencée avec une alternance de phases SiC et de phases de matrice de moindre rigidité, par exemple en carbone pyrolytique (PyC), nitrure de bore (BN) ou carbone dopé au bore (BC), avec une phase terminale de matrice en SiC, ou
une matrice auto-cicatrisante avec des phases de matrice en carbure de bore (B₄C) ou en un système ternaire Si-B-C, éventuellement avec carbone libre (B₄C + C, Si-B-C + C), et avec une phase terminale Si-B-C ou SiC.

De tels matériaux CMC sont décrits notamment dans les documents US 5 246 736, US 5 965 266, US 6 291 058 et US 6 068 930.

La barrière environnementale 20 est formée sur toute la surface externe du substrat 10 ou sur une partie seulement de cette surface, par exemple lorsque seulement une partie de la surface doit être protégée. La barrière environnementale 20 comprend une couche externe auto-cicatrisante 22 et une couche interne ou sous-couche 24 interposée entre le substrat 10 et la couche auto-cicatrisante 22.

La couche auto-cicatrisante 22 est essentiellement sous forme d'un système d'oxydes formé d'au moins un oxyde de terre rare RE₂O₃ (RE désignant une terre rare), de silice SiO₂ et d'alumine Al₂O₃, ci-après désigné par système RE₂O₃-SiO₂-Al₂O₃. La ou chaque terre rare est choisie parmi Y, Sc, et des lanthanides, comme par exemple Yb, Dy, Er et La, de préférence parmi Y et Yb. Outre un tel système d'oxydes, la couche auto-cicatrisante peut comporter de façon minoritaire d'autres constituants ayant notamment pour fonction de moduler la température d'auto-cicatrisation ou le coefficient de dilatation thermique. Ainsi, la température d'auto-cicatrisation peut être augmentée par ajout d'oxydes tels que des oxydes de titane TiO₂, de zirconium ZrO₂, d'hafnium HfO₂ et/ou de vanadium V₂O₃ ou peut être diminuée par ajout d'oxydes tels que des oxydes de zinc ZnO, de nickel NiO, de manganèse MnO, de calcium CaO, de magnésium MgO, de baryum BaO, de strontium SrO, de fer FeO₃ ou FeO et/ou de niobium Nb₂O₅. Une modification du coefficient de dilatation thermique peut être obtenue par ajout d'oxyde de tantale Ta₂O₅. Ces autres constituants représentent au plus 30% molaire, de préférence au plus 10% molaire dans la composition de la couche auto-cicatrisante.

De préférence toutefois, aux inévitables impuretés près, la couche auto-cicatrisante est constituée d'un système d'oxydes RE₂O₃-SiO₂-Al₂O₃, de préférence encore avec un seul oxyde de terre rare.

La composition de la couche 22 est choisie pour lui permettre de s'auto-cicatriser par formation d'une phase liquide avec maintien d'une phase solide dans un domaine de températures allant jusqu'à au moins 1400°C, de préférence jusqu'à au moins 1450°C, et pouvant aller jusqu'à 1700°C.

La sélection de la composition du système RE₂O₃-SiO₂-Al₂O₃ peut être effectuée de la façon suivante.

Pour une température souhaitée d'auto-cicatrisation de ce système, on recherche dans le diagramme de phases RE₂O₃-SiO₂-Al₂O₃ une composition donnant une phase liquide à cette température en présence d'une ou plusieurs phases solides, la phase liquide étant en quantité suffisante, représentant de préférence au moins 5% molaire, de préférence encore au moins 10 % molaire dans la composition de la couche 22, mais non excessive, c'est-à-dire représentant de préférence au plus 40% molaire dans la composition de la couche 22.

La sous-couche 24 peut être essentiellement formée d'un silicate de terre rare ou de plusieurs silicates d'une même terre rare ou de terres rares différentes. Pour une terre rare donnée RE, le ou les silicates peut ou peuvent être sous forme RE₂SiO₅ et/ou RE₂Si₂O₇ et/ou RE_{4.67}(SiO₄)₃O. La ou chaque terre rare est par exemple choisie parmi Y, Sc, et les lanthanides comme par exemple Yb, Dy, Er et La. Lorsque la couche auto-cicatrisante 22 comprend un oxyde d'une seule terre rare et la sous-couche 24 comprend un silicate d'une seule terre rare, la terre rare de la sous-couche 24 peut être identique à celle de la couche auto-cicatrisante 22 ou être différente de cette dernière.

La sous-couche 24 peut aussi être essentiellement formée de mullite déposée sur le substrat 20 directement ou avec interposition d'un revêtement de silicium formé sur le substrat pour favoriser l'accrochage de la mullite. On peut aussi former la sous-couche par un revêtement ayant essentiellement un gradient de composition silicium-mullite en partant de silicium du côté du substrat pour aboutir à mullite du côté de la couche auto-cicatrisante 22.

La sous-couche 24 peut comporter de façon minoritaire d'autres constituants, par exemple un ou plusieurs oxydes permettant de moduler le coefficient de dilatation thermique, tel que l'oxyde de tantale Ta₂O₅. Ces autres constituants représentent au plus 30% molaire, de préférence au plus 10% molaire de la composition de la sous-couche 24. Il est important que la sous-couche 24 reste stable chimiquement et thermiquement dans les conditions d'utilisation et soit compatible chimiquement et thermomécaniquement avec le substrat et la silice. En d'autres termes, il est souhaitable que la sous-couche 24 reste à l'état solide aux températures recherchées d'auto-cicatrisation de la couche auto-cicatrisante 22 pour éviter un contact direct entre le substrat 10 et la couche auto-cicatrisante 22, et ne forme pas une phase liquide avec le substrat et la silice contenue dans la couche auto-cicatrisante 22 ou provenant d'une oxydation du silicium du substrat 10. Il est souhaitable aussi que le coefficient de dilatation thermique de la sous-couche 24 soit relativement proche de ceux du substrat 10 et de la couche auto-cicatrisante 22.

De préférence, aux impuretés près, la sous-couche 24 est constituée de silicate d'une seule terre rare.

La sous-couche 24 peut être formée sur le substrat 10 par projection plasma à partir de poudres solides RE₂O₃ et SiO₂ et/ou de poudres de composés RE₂SiO₅, RE₂Si₂O, RE_{4.67}(SiO₄)₃O, et éventuellement de poudres d'autres constituants minoritaires.

De façon similaire, la couche externe auto-cicatrisante 22 peut être formée sur la sous-couche 24 par projection plasma à partir de poudres solides RE₂O₃, SiO₂ et Al₂O₃ et/ou de poudres de composés tels que RE₂SiO₅, RE₂Si₂O₇, RE_{4.67}(SiO₄)₃O, mullite (3Al₂O₃-2SiO₂), RE₃Al₅O₁₂, RE₄Al₂O₉, REAlO₃, et éventuellement de poudres d'autres constituants minoritaires, les quantités respectives de poudres projetées étant choisies en fonction de la composition finale désirée.

D'autres procédés de dépôt sont envisageables pour la sous-couche 24 et la couche externe auto-cicatrisante 22, par exemple l'amenée de particules sous forme sol-gel, l'application de poudres sous forme d'une barbotine, un dépôt par électrophorèse, un dépôt physique en phase gazeuse ou PVD ("Physical Vapor Deposition") ou un dépôt chimique en phase gazeuse CVD ("Chemical Vapor Deposition").

L'épaisseur de la sous-couche 24 est choisie relativement faible, par exemple comprise entre 10 microns et 300 microns, et l'épaisseur de la couche auto-cicatrisante peut également être choisie relativement faible, par exemple comprise entre 10 microns et 300 microns. L'épaisseur pourra dépendre aussi de la capacité du processus de dépôt utilisé à former des couches minces homogènes d'épaisseur sensiblement uniforme. Ainsi, par exemple, pour de faibles épaisseurs, on pourra préférer utiliser un processus de dépôt de type PVD ou CVD.

La présence d'une couche externe auto-cicatrisante avec maintien d'une phase solide permet d'avoir une barrière environnementale efficace, étanche et persistante aux températures d'auto-cicatrisation. En cas de retour à une température inférieure à la température d'auto-cicatrisation, une cristallisation de la phase liquide se produit et l'étanchéité reste assurée par un revêtement se présentant sous forme d'une juxtaposition de grains. En cas d'apparition de fissures, une élévation de la température jusqu'à la température d'auto-cicatrisation suffit pour colmater celles-ci.

### Exemple 1

Un substrat en matériau composite SiC/SiC (renfort fibreux en fibres SiC et matrice SiC) a été muni d'une barrière environnementale de la façon suivante :
- dépôt par projection plasma sur le substrat SiC/SiC d'une sous-couche de silicate d'yttrium Y₂Si₂O₇ à partir de poudre de Y₂Si₂O₇, avec une épaisseur d'environ 200 microns, et
- dépôt par projection plasma sur la sous-couche d'une couche externe à partir d'un mélange de poudres de mullite (15% molaire) et de Y₂Si₂O₇ (85% molaire), donnant une composition formant un système Y₂O₃ (53,61% massique), SiO₂ (33,57% massique) et Al₂O₃ (12,82% massique), l'épaisseur de la couche externe étant d'environ 100 microns.

La couche externe possède à 1400°C et à 1450°C une phase liquide capable de cicatriser des fissures apparaissant dans la barrière environnementale, avec deux phases solides à 1400°C et une phase solide à 1450°C.

La figure 2 montre une partie de la surface de la couche externe après élévation de la température après 50 h sous air à 1400°C et la figure 3 montre une partie de surface de la couche externe après 20 h sous air à 1450°C. On distingue des phases solides formées par des grains de Y₂Si₂O₇ (en blanc) et de Al₂O₃ (en noir) et une phase liquide qui occupe tout l'espace entre grains solides assurant l'étanchéité de la barrière environnementale. La phase liquide possède la composition du péritectique : mullite + Y₂Si₂O₇ → Al₂O₃ + phase liquide, la composition de la phase liquide étant 12,8% at. Al, 15,75% at. Si, 8,3% at. Y et 63,15% at. O. Dans la composition de la couche externe, cette phase liquide représentait environ 10% à 15% molaire à 1400°C et environ 15% à 20% molaire à 1450°C.

La figure 4 montre une partie de la surface de la couche externe après 20 h à 1450°C puis 90 h à 1200°C. La cristallisation de la phase liquide s'est produite et l'étanchéité du revêtement est assurée par la juxtaposition de grains.

### Exemple 2

On a procédé comme dans l'exemple 1 mais en formant la couche externe à partir d'un mélange de poudres de mullite (41,2% molaire) et de Y₂Si₂O₇ (58,8% molaire), donnant une composition formant un système Y₂O₃ (35,04% massique), SiO₂ (31,71% massique) et Al₂O₃ (33,25% massique).

La figure 5 montre une partie de la surface de la couche externe après 50 h sous air à 1400°C. La phase liquide identique à celle de l'exemple 1 occupe tout l'espace entre les grains de Y₂Si₂O₇ (blancs) et de mullite et d'Al₂O₃ (noirs), assurant l'auto-cicatrisation. Dans la composition de la couche externe, la phase liquide représentait environ entre 5% et 8% molaire.

On note qu'à 1450°C, la couche externe a fondu, la quantité de phase liquide devenant trop importante.

### Exemple 3

On a procédé comme dans l'exemple 1 mais en formant la couche externe à partir d'un mélange de poudres de mullite (54,4% molaire) et de Y₂Si₂O₇ (45,6% molaire), donnant une composition formant un système Y₂O₃ (26,43% massique), SiO₂ (30,85% massique) et Al₂O₃ (42,72% massique).

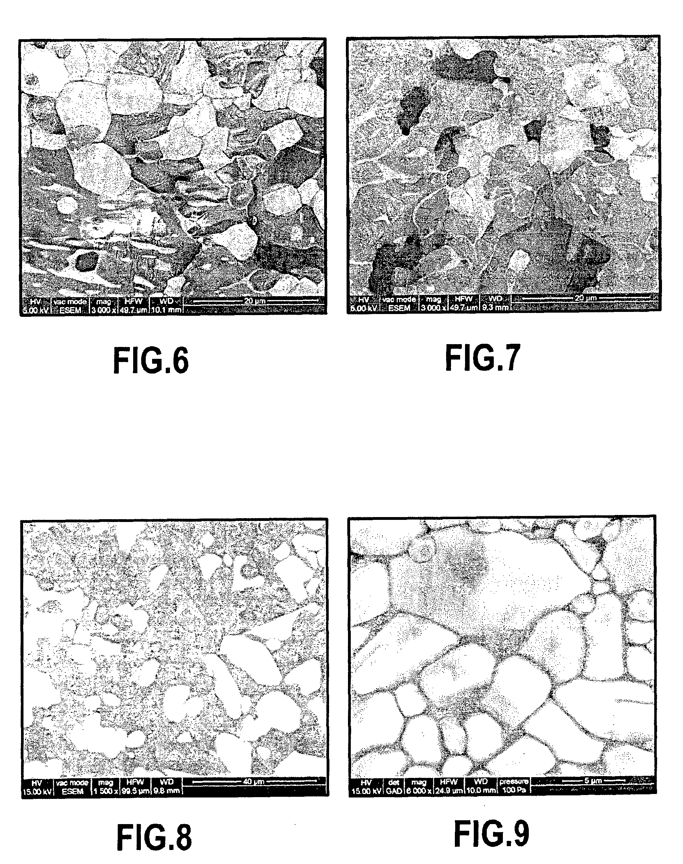

La figure 6 montre une partie de la surface de la couche externe après 50 h sous air à 1400°C. Il y a bien formation d'une phase liquide identique à celle de l'exemple 1, mais la quantité de phase liquide est insuffisante, des porosités subsistant. L'auto-cicatrisation ne peut donc pas complètement être réalisée. Dans la composition de la couche externe, la phase liquide représentait sensiblement moins de 5% molaire.

A 1450°C, la couche externe a fondu, la quantité de phase liquide devenant trop importante.

### Exemple 4

On a procédé comme dans l'exemple 1 mais en formant la couche externe à partir d'un mélange de poudres de mullite (80% molaire) et de Y₂Si₂O₇ (20% molaire), donnant une composition formant un système Y₂O₃ (11,01% massique), SiO₂ (29,31% massique) et Al₂O₃ (59,68 % massique).

La figure 7 montre une partie de la surface de la couche externe après 50 h sous air à 1400°C. Il y a bien formation d'une phase liquide identique à celle de l'exemple 1 mais, comme dans l'exemple 3, en quantité insuffisante pour assurer une cicatrisation satisfaisante. Dans la composition de la couche externe, la phase liquide représentait sensiblement moins de 5% molaire.

A 1450°C, la couche externe a fondu, la quantité de phase liquide devenant trop importante.

Les exemples 1 à 4 montrent qu'en formant la couche externe à partir d'un mélange de mullite et Y₂Si₂O₇, la proportion molaire de mullite doit être de préférence inférieure à 50%, la phase liquide représentant au plus 20% molaire dans la composition de la couche externe.

### Exemple 5

On a procédé comme dans l'exemple 1 mais en formant la couche externe à partir d'un mélange de poudres d'aluminate d'yttrium Y₄Al₂O₉ (8% molaire) et de SiO₂ (92% molaire), donnant une composition formant un système Y₂O₃ (36,29% massique), SiO₂ (55,52% massique) et Al₂O₃ (8,19% massique).

La figure 8 montre une partie de la surface de la couche externe après 50 h sous air à 1400°C. On distingue des phases solides formées par des grains de Y₂Si₂O₇ (blancs) et de SiO₂ (noirs) et une phase liquide occupant tout l'espace entre les grains et assurant l'étanchéité de la barrière environnementale. La phase liquide possédait environ, en masse, la composition Y₂O₃ (35%), SiO₂ (50%) et Al₂O₃ (15%). Dans la couche externe, la phase représentait environ entre 10% et 15% molaire.

### Exemple 6

On a procédé comme dans l'exemple 1 mais en remplaçant Y₂Si₂O₇ par du silicate d'ytterbium Yb₂Si₂O₇ dans la sous-couche et dans la couche externe, celle-ci étant formée de 15% molaire de mullite et 85% molaire de Yb₂Si₂O₇.

La figure 9 montre une partie de la surface de la couche externe après 20h sous air à 1450°C, on a constaté la présence d'une phase liquide assurant une cicatrisation efficace avec présence de phases solides formées par des grains de Yb₂Si₂O₇ et Al₂O₃, principalement, et mullite. La phase liquide représentait environ entre 5% et 8% molaire dans la couche externe et possédait la composition 52,25% at. O, 13,38% at. Al, 17,84% at. Si et 16,53% at. Yb.

## Revendications

1. Procédé pour protéger un substrat, dont au moins une partie adjacente à une surface est en un matériau réfractaire contenant du silicium, lors d'une utilisation à haute température en milieu oxydant et humide, par formation sur la surface du substrat d'une barrière environnementale ne contenant pas de bore,
**caractérisé en ce que** l'on forme une barrière environnementale ayant une couche auto-cicatrisante constituée essentiellement d'un système d'oxydes formé d'au moins un oxyde de terre rare, de silice et d'alumine, le système d'oxydes étant choisi pour conserver une phase solide majoritaire jusqu'à au moins 1400°C et pour former, à une température égale ou supérieure à 1400°C, une phase liquide représentant entre 5% molaire et 40% molaire de la composition totale de ladite couche auto-cicatrisante.

2. Procédé selon la revendication 1, **caractérisé en ce que** l'on forme une barrière environnementale comprenant en outre une sous-couche qui est interposée entre la surface du substrat et la couche auto-cicatrisante et qui reste à l'état solide à la température de formation de ladite phase liquide.

3. Procédé selon la revendication 2, **caractérisé en ce que** l'on forme une sous-couche choisie parmi :
- une sous-couche constituée essentiellement de silicate d'au moins une terre rare,
- une sous-couche constituée essentiellement de mullite,
- une sous-couche constituée essentiellement de mullite déposée sur un revêtement en silicium formé sur le substrat, et
- une sous-couche ayant essentiellement un gradient de composition silicium-mullite en partant de silicium du côté du substrat pour aboutir à mullite du côté de la couche auto-cicatrisante.

4. Procédé selon l'une quelconque des revendications 1 à 3, **caractérisé en ce que** la couche auto-cicatrisante représente essentiellement un mélange de silicate de terre rare RE₂Si₂O₇, où RE est une terre rare, et de mullite (3Al₂O₃.2SiO₂).

5. Procédé selon l'une quelconque des revendications 1 à 3, **caractérisé en ce que** la couche auto-cicatrisante représente essentiellement un mélange d'aluminate de terre rare RE₄Al₂O₉, où RE est une terre rare, et de silice SiO₂.

6. Procédé selon l'une quelconque des revendications 1 à 5, **caractérisé en ce que** la terre rare est l'une au moins choisie parmi l'yttrium, la scandium et des lanthanides, notamment l'ytterbium et l'erbium.

7. Procédé selon l'une quelconque des revendications 1 à 6, **caractérisé en ce que** l'on forme une barrière environnementale ayant une couche auto-cicatrisante comprenant de l'oxyde de manganèse MnO.

8. Procédé selon la revendication 7, **caractérisé en ce que** l'oxyde de manganèse MnO représente au plus 30% molaire dans la composition de la couche auto-cicatrisante

9. Pièce comprenant un substrat, dont au moins une partie adjacente à une surface du substrat est en un matériau réfractaire contenant du silicium, et une barrière environnementale ne contenant pas de bore formée sur la surface du substrat et capable de protéger le substrat lors d'une utilisation à haute température en milieu oxydant et humide,
**caractérisé en ce que** la barrière environnementale a une couche auto-cicatrisante constituée essentiellement d'un système d'oxydes formé d'au moins un oxyde de terre rare, de silice et d'alumine, le système d'oxydes conservant une phase solide majoritaire jusqu'à au moins 1400°C et formant, à une température égale ou supérieure à 1400°C , une phase liquide représentant entre 5% molaire et 40% molaire de la composition totale de ladite couche externe.

10. Pièce selon la revendication 9, **caractérisée en ce que** la barrière environnementale comprend en outre une sous-couche interposée entre la surface du substrat et la couche auto-cicatrisante et choisie parmi :
- une sous-couche constituée essentiellement de silicate d'au moins une terre rare,
- une sous-couche constituée essentiellement de mullite,
- une sous-couche constituée essentiellement de mullite déposée sur un revêtement en silicium formé sur le substrat, et
- une sous-couche ayant essentiellement un gradient de composition silicium-mullite en partant de silicium du côté du substrat pour aboutir à mullite du côté de la couche auto-cicatrisante.

11. Pièce selon l'une quelconque des revendications 9 et 10, **caractérisée en ce que** la couche auto-cicatrisante représente essentiellement un mélange de silicate de terre rare RE₂Si₂O₇, ou RE est une terre rare, et de mullite (3Al₂O₃.2SiO₂).

12. Pièce selon l'une quelconque des revendications 9 et 10, **caractérisée en ce que** la couche auto-cicatrisante représente essentiellement un mélange d'aluminate de terre rare RE₄Al₂O₉, où RE est une terre rare, et de silice SiO₂.

13. Pièce selon l'une quelconque des revendications 9 à 12, **caractérisée en ce que** la terre rare est l'une au moins choisie parmi l'yttrium, le scandium et des lanthanides, notamment l'ytterbium et l'erbium.

14. Pièce selon l'une quelconque des revendications 9 à 13, **caractérisée en ce que** la couche auto-cicatrisante comprend de l'oxyde de manganèse MnO.

15. Pièce selon l'une quelconque des revendications 9 à 14, **caractérisée en ce que** le substrat est en un matériau composite comprenant un renfort fibreux et une matrice, la matrice comportant au moins une phase de carbure de silicium SiC adjacente à la surface du substrat.

## Patentansprüche

1. Verfahren, um ein Substrat, von dem wenigstens ein einer Oberfläche benachbarter Teil aus einem siliciumhaltigen feuerfesten Werkstoff besteht, während einer Verwendung bei hoher Temperatur in oxidierender und feuchter Umgebung durch Ausbilden einer nicht borhaltigen Umweltbarriere auf der Oberfläche des Substrats zu schützen,
**dadurch gekennzeichnet, dass** eine Umweltbarriere gebildet wird, die eine selbstheilende Schicht aufweist, welche im Wesentlichen aus einem von wenigstens einem Seltenerdoxid, Siliciumdioxid und Aluminiumoxid gebildeten Oxidsystem besteht, wobei das Oxidsystem gewählt ist, um eine überwiegende feste Phase bis wenigstens 1400 °C zu bewahren und um bei einer Temperatur von gleich oder über 1400 °C eine flüssige Phase zu bilden, die zwischen 5 Mol-% und 40 Mol-% der Gesamtzusammensetzung der selbstheilenden Schicht ausmacht.

2. Verfahren nach Anspruch 1, **dadurch gekennzeichnet, dass** eine Umweltbarriere gebildet wird, die ferner eine Unterschicht umfasst, welche zwischen der Oberfläche des Substrats und der selbstheilenden Schicht eingefügt ist und welche bei der Temperatur zur Bildung der flüssigen Phase in festem Zustand bleibt.

3. Verfahren nach Anspruch 2, **dadurch gekennzeichnet, dass** eine Unterschicht gebildet wird, die ausgewählt ist aus:
- einer Unterschicht, die im Wesentlichen aus Silikat von wenigstens einer Seltenen Erde besteht,
- einer im Wesentlichen aus Mullit bestehenden Unterschicht,
- einer im Wesentlichen aus Mullit bestehenden Unterschicht, die auf einer auf dem Substrat gebildeten Siliciumbeschichtung abgeschieden ist, und
- einer Unterschicht mit im Wesentlichen einem Silicium-Mullit-Zusammensetzungsgradienten, ausgehend von Silicium auf der Seite des Substrats bis zu Mullit auf der Seite der selbstheilenden Schicht.

4. Verfahren nach einem der Ansprüche 1 bis 3, **dadurch gekennzeichnet, dass** die selbstheilende Schicht im Wesentlichen eine Mischung aus Seltenerdsilikat RE₂Si₂O₇, worin RE eine Seltene Erde ist, und aus Mullit (3Al₂O₃.2SiO₂) darstellt.

5. Verfahren nach einem der Ansprüche 1 bis 3, **dadurch gekennzeichnet, dass** die selbstheilende Schicht im Wesentlichen eine Mischung aus Seltenerdaluminat RE₄Al₂O₉, worin RE eine Seltene Erde ist, und aus Siliciumdioxid SiO₂ darstellt.

6. Verfahren nach einem der Ansprüche 1 bis 5, **dadurch gekennzeichnet, dass** die Seltene Erde wenigstens eine ausgewählt aus Yttrium, Scandium und Lanthanoiden, insbesondere Ytterbium und Erbium ist.

7. Verfahren nach einem der Ansprüche 1 bis 6, **dadurch gekennzeichnet, dass** eine Umweltbarriere, die eine Manganoxid MnO umfassende selbstheilende Schicht aufweist, gebildet wird.

8. Verfahren nach Anspruch 7, **dadurch gekennzeichnet, dass** das Manganoxid MnO höchstens 30 Mol-% in der Zusammensetzung der selbstheilenden Schicht ausmacht.

9. Teil, umfassend ein Substrat, von dem wenigstens ein einer Oberfläche des Substrats benachbarter Teil aus einem siliciumhaltigen feuerfesten Werkstoff besteht, sowie eine nicht borhaltige Umweltbarriere, die auf der Oberfläche des Substrats gebildet und in der Lage ist, das Substrat während einer Verwendung bei hoher Temperatur in oxidierender und feuchter Umgebung zu schützen,
**dadurch gekennzeichnet, dass** die Umweltbarriere eine selbstheilende Schicht aufweist, die im Wesentlichen aus einem von wenigstens einem Seltenerdoxid, Siliciumdioxid und Aluminiumoxid gebildeten Oxidsystem besteht, wobei das Oxidsystem eine überwiegende feste Phase bis wenigstens 1400 °C bewahrt und bei einer Temperatur von gleich oder über 1400 °C eine flüssige Phase bildet, die zwischen 5 Mol-% und 40 Mol-% der Gesamtzusammensetzung der Außenschicht ausmacht.

10. Teil nach Anspruch 9, **dadurch gekennzeichnet, dass** die Umweltbarriere ferner eine Unterschicht umfasst, die zwischen der Oberfläche des Substrats und der selbstheilenden Schicht eingefügt ist und die ausgewählt ist aus:
- einer Unterschicht, die im Wesentlichen aus Silikat von wenigstens einer Seltenen Erde besteht,
- einer im Wesentlichen aus Mullit bestehenden Unterschicht,
- einer im Wesentlichen aus Mullit bestehenden Unterschicht, die auf einer auf dem Substrat gebildeten Siliciumbeschichtung abgeschieden ist, und
- einer Unterschicht mit im Wesentlichen einem Silicium-Mullit-Zusammensetzungsgradienten, ausgehend von Silicium auf der Seite des Substrats bis zu Mullit auf der Seite der selbstheilenden Schicht.

11. Teil nach einem der Ansprüche 9 und 10, **dadurch gekennzeichnet, dass** die selbstheilende Schicht im Wesentlichen eine Mischung aus Seltenerdsilikat RE₂Si₂O₇, worin RE eine Seltene Erde ist, und aus Mullit (3Al₂O₃.2SiO₂) darstellt.

12. Teil nach einem der Ansprüche 9 und 10, **dadurch gekennzeichnet, dass** die selbstheilende Schicht im Wesentlichen eine Mischung aus Seltenerdaluminat RE₄Al₂O₉, worin RE eine Seltene Erde ist, und aus Siliciumdioxid SiO₂ darstellt.

13. Teil nach einem der Ansprüche 9 bis 12, **dadurch gekennzeichnet, dass** die Seltene Erde wenigstens eine ausgewählt aus Yttrium, Scandium und Lanthanoiden, insbesondere Ytterbium und Erbium ist.

14. Teil nach einem der Ansprüche 9 bis 13, **dadurch gekennzeichnet, dass** die selbstheilende Schicht Manganoxid MnO umfasst.

15. Teil nach einem der Ansprüche 9 bis 14, **dadurch gekennzeichnet, dass** das Substrat aus einem Verbundwerkstoff, der eine Faserverstärkung und eine Matrix umfasst, besteht, wobei die Matrix wenigstens eine Siliciumcarbid SiC-Phase, die der Oberfläche des Substrats benachbart ist, umfasst.

## Claims

1. A method of protecting a substrate during use at high temperature in a medium that is oxidizing and wet, the substrate having at least a portion adjacent to a surface that is made of a refractory material containing silicon, by forming an environmental barrier that does not contain boron on the surface of the substrate,
the method being **characterized in that** an environmental barrier is formed having at least one self-healing layer that is constituted essentially by a system of oxides formed by at least one rare earth oxide, silica, and alumina, which system conserves a majority solid phase up to at least 1400°C and presents a liquid phase at a temperature equal to or greater than 1400°C, said liquid phase representing in the range 5 mol% to 40 mol% of the total composition of said self-healing layer.

2. A method according to claim 1, **characterized in that** an environmental barrier is formed that also includes an underlayer that is interposed between the surface of the substrate and the self-healing layer, and that remains in the solid state at the temperature of formation of said liquid phase.

3. A method according to claim 2, **characterized in that** an underlayer is formed selected from:
· an underlayer that is constituted essentially by silicate of at least one rare earth;
· an underlayer constituted essentially by mullite;
· an underlayer constituted essentially by mullite deposited on a coating of silicon formed on the substrate; and
· an underlayer essentially having a silicon-mullite composition gradient starting with silicon beside the substrate and terminating with mullite beside the self-healing layer.

4. A method according to any one of claims 1 to 3, **characterized in that** the self-healing layer essentially represents a mixture of rare earth silicate RE₂Si₂O₇, where RE is a rare earth, and of mullite (3Al₂O₃.2SiO₂).

5. A method according to any one of claims 1 to 3, **characterized in that** the self-healing layer essentially represents a mixture of rare earth aluminate RE₄Al₂O₉, where RE is a rare earth, and of silica SiO₂.

6. A method according to any one of claims 1 to 5, **characterized in that** the rare earth is at least one selected from yttrium, scandium, and the lanthanides, in particular ytterbium and erbium.

7. A method according to any one of claims 1 to 6, **characterized in that** an environmental barrier is formed that also includes a self-healing layer comprising manganese oxide MnO.

8. A method according to claim 7, **characterized in that** the manganese oxide MnO represents at most 30 mol% of the self-healing layer.

9. A part comprising a substrate having at least a portion that is adjacent to a surface of the substrate that is made of a refractory material containing silicon, and an environmental barrier that does not contain boron formed on the surface of the substrate and capable of protecting the substrate during use at high temperature in a medium that is oxidizing and wet,
**characterized in that** the environmental barrier has at least one self-healing layer that is constituted essentially by a system of oxides formed by at least one rare earth oxide, silica, and alumina, which system conserves a majority solid phase up to at least 1400°C and presents a liquid phase at a temperature equal to or greater than 1400°C, said liquid phase representing in the range 5 mol% to 40 mol% of the total composition of said external layer.

10. A part according to claim 9, **characterized in that** the environmental barrier further includes an underlayer interposed between the surface of the substrate and the self-healing layer and selected from:
· an underlayer that is constituted essentially by silicate of at least one rare earth;
· an underlayer constituted essentially by mullite;
· an underlayer constituted essentially by mullite deposited on a coating of silicon formed on the substrate; and
· an underlayer essentially having a silicon-mullite composition gradient starting with silicon beside the substrate and terminating with mullite beside the self-healing layer.

11. A part according to claim 9 or claim 10, **characterized in that** the self-healing layer essentially represents a mixture of rare earth silicate RE₂Si₂O₇, where RE is a rare earth, and of mullite (3Al₂O₃.2SiO₂).

12. A part according to claim 9 or claim 10, **characterized in that** the self-healing layer essentially represents a mixture of rare earth aluminate RE₄Al₂O₉, where RE is a rare earth, and of silica SiO₂.

13. A part according to any one of claims 9 to 12, **characterized in that** the rare earth is at least one selected from yttrium, scandium, and the lanthanides, in particular ytterbium and erbium.

14. A part according to any one of claims 9 to 13, **characterized in that** the self-healing layer comprises manganese oxide MnO.

15. A part according to any one of claims 9 to 14, **characterized in that** the substrate is made of a composite material comprising fiber reinforcement and a matrix, the matrix including at least one phase of silicon carbide SiC adjacent to the surface of the substrate.
